# EUROPEAN PATENT SPECIFICATION

(11) **EP 4 175 022 B1**
(45) Date of publication and mention of the grant of the patent: **09.07.2025**
(21) Application number: 21205222.9
(22) Date of filing: 28.10.2021
(51) Int. Cl.: H01M 10/6566

(54) **BATTERY SYSTEM AND VEHICLE INCLUDING THE BATTERY SYSTEM**
BATTERIESYSTEM UND FAHRZEUG MIT DEM BATTERIESYSTEM
SYSTÈME DE BATTERIE ET VÉHICULE COMPRENANT LE SYSTÈME DE BATTERIE

(43) Date of publication of application: 03.05.2023
(73) Proprietor: Samsung SDI Co., Ltd., Yongin-si, Gyeonggi-do 17084 (KR)
(72) Inventor: Hadler, Bernhard, 8073 Feldkirchen/Graz (AT)
(74) Representative: Gulde & Partner

(56) References cited:
- EP-A1- 2 475 028
- EP-A1- 3 249 716
- CN-A- 110 071 245
- CN-A- 110 165 104
- US-A1- 2012 077 062
- US-A1- 2015 214 524
- US-A1- 2019 229 384

## Description

### Field of the Disclosure

The present invention relates to a battery system allowing for a venting gas exhausted in case of a thermal runaway to be kept away from neighboring battery cells and to cool down before leaving the battery system. Further, the present invention relates to a vehicle comprising the battery system.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery, EVB, or traction battery is a battery used to power the propulsion of battery electric vehicles, BEVs. Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for electric and hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

Rechargeable batteries may be used as a battery module formed of a plurality of unit battery cells coupled in series and/or in parallel so as to provide a high energy content, in particular for motor driving of a hybrid vehicle. That is, the battery module is formed by interconnecting the electrode terminals of the plurality of unit battery cells depending on a required amount of power and in order to realize a high-power rechargeable battery.

Battery modules can be constructed either in block design or in modular design. In block designs each battery is coupled to a common current collector structure and a common battery management system and the unit thereof is arranged in a housing. In modular designs, pluralities of battery cells are connected to form submodules and several submodules are connected to form the battery module. In automotive applications, battery systems often consist of a plurality of battery modules connected in series for providing a desired voltage. Therein, the battery modules may comprise submodules with a plurality of stacked battery cells, each stack comprising cells connected in parallel that are connected in series (*XpYs*) or multiple cells connected in series that are connected in parallel (*XsYp*)*.*

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle.

To provide thermal control of the enclosed battery cells within the battery housing a thermal management system may be used to efficiently emit, discharge and/or dissipate heat generated within the battery housing. In certain conditions of the battery cells an increase of the internal temperature can lead to abnormal reactions occurring in the battery cells. An example of such abnormal operation conditions is a thermal runaway in a battery cell that may be entered by a strongly overheated or overcharged cell. The thermal runaway is a self-accelerating chemical reaction inside the battery cell, which produces high amounts of heat and venting gas, until nearly all available material is exhausted. The exhausted material, i.e. the venting products, may comprise hot and toxic venting gas as well as potentially conductive solid material, like graphite powder and metal fragments.

The temperature of the venting products, in particular of the venting gas, can reach temperatures of 1000°C or even higher, in particular when several battery cells go into thermal runaway at the same time or within a short time span. The temperature of the venting products is usually still very high when leaving the battery system through the system venting element to the environment. This presents a danger for bystanders as the hot venting products may cause burns and may ignite causing a fire.

A state of the art venting concept of a battery system is to let the hot venting products of battery cells in thermal runaway condition expand into the battery housing and exit the battery system through a system venting element to the environment of the battery housing. As the venting products escape the battery system the pressure inside the battery system can be kept in a safe range. The system venting element can e.g. be dimensioned according to ISO4126-6. However, with such designs the venting stream can transfer heat or particles onto other cells or electrically conductive parts which could lead to a thermal propagation or short circuit causing a thermal runaway of other cells leading to a damage of the whole battery pack and possibly the vehicle.

From DE 10 2017 212 223 A1 a battery system is known where the venting products in case of a thermal runaway exit the battery cells at the bottom through a cooling plate directly into a joint venting channel.

CN 110165104 concerns a battery pack including a plurality of cell blocks, each cell block comprising a plurality of battery cells, wherein the battery pack also includes a plenum chamber configured to fluidly couple each of the cell blocks to an exterior of the battery pack in response to a thermal event in the battery cell in a separate cell block.

EP 2 475 028 A concerns a battery module in which a plurality of cells are arranged and housed in a case, wherein each of the cells has a vent through which a gas generated in the cell is released to outside the cell, the case is divided, by a flat plate provided at same sides of the cells, into a housing space housing the cells and an exhaust duct for releasing a gas from the vents of the cells to outside the case.

It is thus an object of the present disclosure to overcome or reduce at least some of the drawbacks of the prior art and to provide a battery system that minimizes the danger of burns and fire, in particular in a simple and cost-efficient manner.

### Summary of Invention

The present invention, which is given in the claims, seeks to solve at least one of the problems existing in the prior art to at least some extent.

In particular, a battery system for a (electric) vehicle is provided comprising a battery housing and a plurality of battery cells within the battery housing. The battery housing may enclose the plurality of battery cells in a cell chamber. The battery cells are arranged in groups. Such a group may be defined by the spatial proximity of its constituent cells, i.e. the cells of one group may be closer to each other than the cells of different groups. In addition or alternatively, such a group may be defined by its constituent cells being electrically interconnected in a specific manner, e.g. in series or in parallel. For example, each battery cell group may form a cell stack. Multiple of these cell stacks may form a (sub)module of the battery system.

Each battery cell group comprises a venting side with at least one venting exit. The venting side may also be considered the venting side of all of the battery cells of the battery system, i.e. the battery cells groups may have the same venting side. In an installation setting where the battery system is installed in a vehicle the venting side may e.g. be the top side of the battery cells or, preferably, the bottom side. In case of a thermal runaway a venting stream comprising venting products exits the battery cell group at the venting side through the venting exit(s).

With known venting methods, as mentioned, the venting streams of all of the battery cells directly enter the cell chamber or a joint venting channel and flow unguided through the battery housing exiting the battery system through a system venting element to the environment of the battery housing. This may lead to the venting stream transferring heat and/or particles onto other cells or electrically conductive parts which could lead to a thermal propagation or short circuit causing a thermal runaway of further cells.

The invention overcomes this problem due to the inventive separation sheet forming separate venting chambers for each of the battery cell groups. The separation sheet is arranged at the venting sides of the battery cell groups, the separation sheet forming one venting chamber for each of the battery cell groups. In other words, the one separation sheet provides multiple separate venting chambers, one for each battery cell group. The venting chambers are separate in the sense that a venting stream being vented by a battery cell group into one of the chambers cannot enter the neighboring venting chambers. Thus, each of the battery cell groups has its own venting chamber into which its venting stream in case of a thermal runaway is directed into. Thus, for each battery cell group at least one venting exit of the respective battery cell group adjoins the respective venting chamber. The venting chamber is formed by the separation sheet in conjunction with the venting side of battery cell group. According to the invention, each venting is delimited on a first side by the venting side of the battery cell group and on a second side opposite the first side by the separation sheet.

The separation sheet is adapted or formed such that the venting streams leaving the venting exits is guided away from the battery cell groups through openings in the separation sheet, wherein the openings are arranged such that each of the venting chamber has at least one opening. Thus, each of the venting chambers comprises an opening for allowing the venting stream to exit the respective venting chamber. The separation sheet may be considered to function as a (venting) baffle, i.e. as an obstruction or guiding element, directing the stream of venting products exiting the venting exit away from the respective battery cell group through the respective opening in the separation sheet/venting chamber. The separation sheet may be formed such that the venting stream may be directed away from the cells more or less resistance free. The separation sheet may comprise guiding surfaces to guide the venting stream from the venting exit along the venting side and through the opening in the separation sheet as will be explained in more detail later on. The separation sheet may be adapted for guiding the venting stream leading the venting exit along at least a part of the venting side towards the opening. The opening may be arranged at a side end of the venting chamber. The separation sheet may comprise or consist of deep drawing metal, i.e. it may be produced via deep drawing of a metal sheet, in particular a steel sheet. Via this drawing process the venting chambers and/or the openings may be formed.

The major advantage of the invention is that the venting stream does not enter directly a common/joint venting channel for venting all of the venting streams of all of the cells but that the venting stream is at first vented into the separate venting chamber. These venting chambers reduce the pressure of the respective venting stream by using the thermal mass of these chambers and the surrounding parts to reduce the initial venting stream temperature. Further, due to the dedicated venting chambers the venting streams are channeled away from the battery cells, in particular the main high voltage package area. The proposed venting geometry thus leads to a sufficient cool-down of the venting products before leaving the respective venting chamber so that the risk of damaging other cells via heat propagation is reduced. Also, the venting chambers shield the respective battery cells group from a venting stream leaving another cell chamber as this venting stream cannot enter other venting chambers. In particular, the venting products exiting the battery system of the invention towards the environment are at lower temperature than with known battery systems. The proposed arrangement of the discussed parts of the battery system is easy to achieve at virtually no added cost with respect to known designs.

With the separation sheet of the invention, the venting streams of the battery cells do not directly enter the cell chamber, i.e. a joint venting channel, but rather enter the respective venting chamber first, as explained. However, the venting streams may be guided from each of the venting chambers into a joint venting channel which may guide the venting stream(s) outside the battery system via a system exit. Thus, according to an embodiment, the battery system comprises a cover element facing the venting side of the battery cell groups, the separation sheet being arranged between the cover element and the venting side, wherein a venting channel is arranged between the separation sheet and the cover element, the venting channel connecting a system exit of the battery housing with the venting chambers via the openings in the separation sheet. The separation sheet may thus, in conjunction with the cover element, also form a joint venting channel for all of the venting streams leaving the separate venting chambers. At a first side of the separation sheet the venting chambers may be formed, in particular in conjunction with the venting sides of the battery cell groups, while at a second side of the separation sheet facing away from the first side the joint venting channel may be formed, in particular in conjunction with the cover element. In an advantageous manner the pre-cooled venting streams exiting the venting chambers through the respective opening are merged into one venting stream thereby providing a controlled venting path to the system exit and thus the environment of the battery system. The venting streams are thus not only guided from their venting exits through their venting chambers but also through the joint venting channel.

According to an embodiment the cover element is a bottom cover. The bottom cover may in particular be part of an underbody or underride protection of the battery housing. In other words, an underbody or underride protection may form the bottom cover. Accordingly, in an installation setting, the battery system is arranged such that the venting side is a bottom side, i.e. such that it faces downward. The venting streams may thus exit the cells downward into the adjacent venting chambers. Such an arrangement may allow for the venting streams to be guided particularly well as gravity will help. Also, such an arrangement may lead to better contact of the venting stream with the walls of the venting chamber and therefore to a better cooling of the venting stream, especially if a cooling plate is provided at the venting side of the battery cells as the venting stream may transfer a lot of heat to this cooling plate. The cooling plate may comprise venting holes or venting valves as venting exits for allowing the venting stream to leave the respective battery cell group.

According to an embodiment the battery cell groups are supported by the separation sheet. In other words, the separation sheet may hold or carry the battery cells groups inside the battery housing. The battery cell groups may be arranged on the separation sheet. The separation sheet may be adapted to hold the battery cell groups, in particular the separation sheet may comprise fixation means for fixing the battery cells to the separation sheet. This may allow for an easy installation of the battery cells groups in the battery housing while simultaneously providing the venting chambers. This way the separation sheet may fulfill a double function: Providing the venting chambers and supporting the battery cell groups. Supporting sheets for supporting the battery cells groups that are already in use today may be used as separation sheets according to the invention, if these supporting sheets are adapted to provide the venting chambers according to the invention. In particular, the sheets may be deep drawn to form the venting chambers, the openings and/or the guiding surfaces. Thus, no additional parts need to be added to the battery system so that the costs stay more or less the same.

According to an embodiment the separation sheet forms a structural member of the battery system. In other words, the separation sheet may function as a structural member of the battery system. The separation sheet may form such a structural member by being adapted to support the battery cells as explained above. As a structural member the separation sheet may, however, not only support the battery cells but may also provide stability to the battery system as a whole, may e.g. function as a cross strut. In that regard the separation sheet may also support the cover element, in particular the bottom cover. Therefore, the separation sheet may be considered part of the battery structure and is used to keep the structural integrity of the entire system.

As mentioned above, the separation sheet, in particular the openings in the separation sheet, may be formed such that the venting stream may be directed away from the cells, preferably more or less resistance free. Thus, according to an embodiment, the separation sheet comprises guiding surfaces for guiding the venting stream towards the opening, in particular from the venting exit through the cell chamber to the opening. The separation sheet may be adapted such that each venting chamber comprises at least one guiding surface. Such guiding surfaces may guide the venting stream away from the battery cells in a constructively simple and efficient manner. In other words, a directional component away from the cells may be applied to the venting stream. The separation sheet may comprise multiple guiding surfaces adapted to direct the venting stream in different directions. For example, a first guiding surface may direct the venting stream in a first direction and a second guiding surface may direct the venting stream in a second direction, the first and second direction being for example perpendicular to one another. According to a respective embodiment a guiding surface of the separation sheet is arranged at a first end of the venting chamber and the opening is arranged at a second end of the venting chamber opposite the first end such that the venting stream is guided from the venting exit along the venting side towards the opening. Thus, the venting stream receives a directional component away from the cells to the side. A further guiding surface may be arranged at the opening to even better guide the venting stream through the opening. With the venting side being a bottom side, the venting stream may thus be guided downwards outside the opening. Further guiding surfaces may be provided to direct the venting stream to a center of the venting chamber.

According to an embodiment each battery cell group forms a cell stack, each stack comprising battery cells electrically connected with one another, e.g. in parallel or in series, as mentioned above. Multiple of these stacks may form a (sub)module of the battery system, the stacks being electrically interconnected as well. It is advantageous to provide separate venting chambers for such cell stacks as these stacks may jointly experience a thermal runaway event, e.g due to heat propagation in between the cells of the same stack.

According to an embodiment the battery system comprises multiple rows of battery cell groups, wherein for each row of battery cell groups a separation sheet is arranged at the venting side of the battery cell groups. Thus, for each of the rows the respective separation sheet forms separate venting chambers, one venting chamber for each battery cell group, for guiding the venting stream leaving the venting exits away from the battery cell groups through openings in the separation sheet. In other words, the battery system may comprise multiple separation sheets each providing venting chambers for multiple battery cells groups, for example for a row of battery cells groups, again one venting chamber per group. These separation sheets may each carry their respective battery cell groups and may function as structural members.

According to another aspect of the present disclosure, a vehicle including a battery system as defined above is provided. The battery system is preferably integrated into an underbody construction of the vehicle which allows the battery system to have a substantially flat shape. As mentioned, the cover element may be a part of this underbody construction. The vehicle is advantageous as in case of a thermal runaway venting products are cooled down substantially by the separate venting chambers before entering the joint venting channel. Thereby the risk of thermal propagation and thus thermal runaway of further cells is reduced or prevented and damage to the vehicle may be prevented.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view of a battery system according to an embodiment,
- Fig. 2: illustrates one of separation sheets of Fig. 1 in a schematic perspective view,
- Fig. 3: illustrates, in part, a cut-away of a separation sheet along the line II-II of Fig. 2 along with a battery cell group, and
- Fig. 4: illustrates a sectional view along the line III-III of Fig. 3.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when an element is referred to as being "above" or "on" another element, it can be directly on the other element, or intervening elements may also be present.

Herein, the terms "top" and "bottom" are defined according to the z-axis. For example, the top cover is positioned at the upper part of the z-axis, whereas the bottom cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

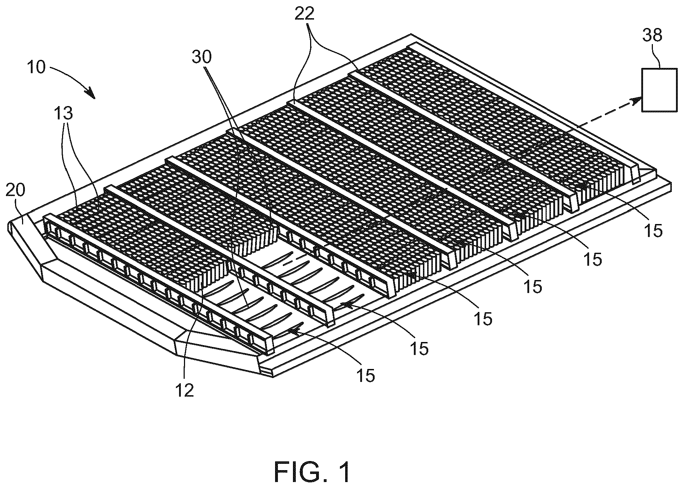

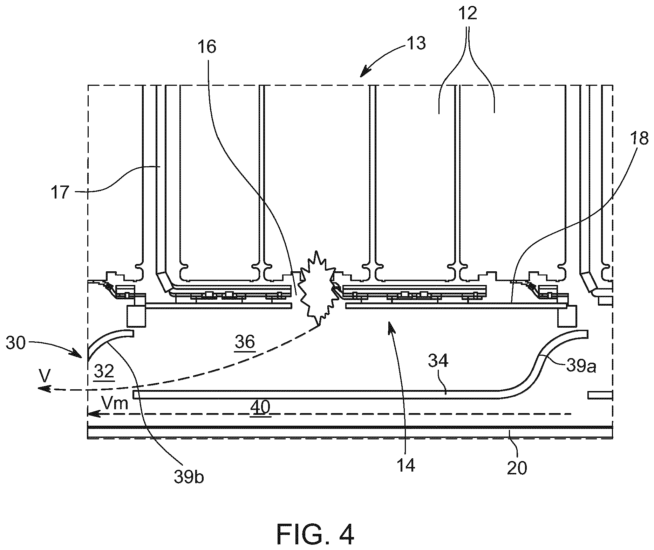

Figure 1 shows an embodiment of a battery system 10 for an electric vehicle according to the invention, comprising a plurality of battery cells 12 and a bottom cover 20 which is part of a battery housing. In this embodiment the battery cells 12 are cylindrical cells but they could also have a different shape. The battery cells 12 are arranged in battery cell groups 13, neighboring battery cell groups 13 being spaced apart spatially from one another along multiple rows 15. The battery cells 12 of each battery cell group 13 are electrically interconnected with one another and thus form a cell stack via electrical connecting means 17 shown in Fig. 4. Neighboring battery cell groups 13 of the same row 15 may be electrically interconnected with one another and the neighboring rows 15 of battery cell groups 13 may also be electrically interconnected with one another so that the entirety of the battery cells 12 forms a battery module with the battery cell groups 13 and/or rows 15 as submodules.

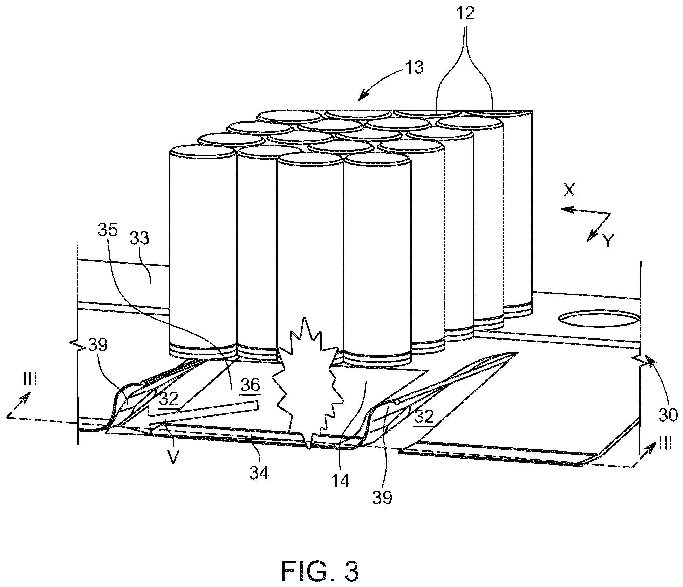

Each battery cell group 13 and therefore the entirety of the battery cells 12 comprises a venting side 14 at a bottom side wherein each battery cell group has at least one venting exit 16 through which a venting stream V comprising venting products may exit the battery cell group 13 in case of a thermal runaway, see Figs. 3 and 4. Thus, the battery cells 12 are arranged to vent the venting stream downwards towards the bottom cover 20.

The battery system 10 further comprises separations sheets 30, wherein each row 15 of battery cell groups 13 is supported on one separation sheet 30. Each separation sheet 30 is thus arranged at the venting sides 14 of its battery cell groups 13. In the first two rows 15 in Fig. 1 some of the battery cell groups 13 are not shown to allow a view of the underlying separation sheets 30. The separation sheets 30 function as structural members carrying their respective battery cell groups 13. In addition, the battery system 10 comprises struts 22 extending in parallel to the separation sheets 30, the struts 22 providing stability to the whole battery system 10. The separation sheets 30 may be supported by the struts 22. The separation sheets 30 themselves may thus also provide stability to the whole battery system 10.

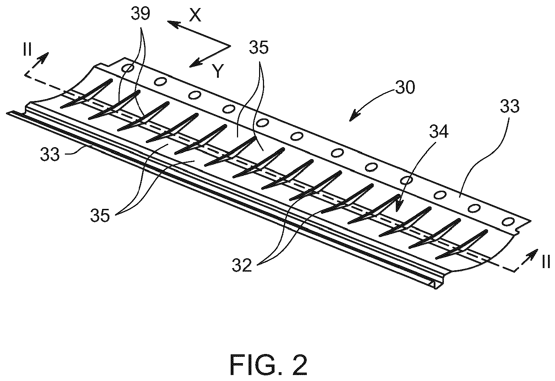

According to the invention, the separation sheet 30 forms separate venting chambers 36 such that there is one venting chamber 36 provided for each battery cell group 13 of each row 15. These venting chambers 16 serve to guide the venting stream V leaving the venting exits 16 away from the battery cell groups 13 through openings 32 in the separation sheet 30 as will be explained below. Figure 2 shows one of the separation sheets 30, wherein the equidistantly arranged openings 32 can be seen. The separation sheet 30 has the shape of a shallow trough or channel with a depression extending along the x-axis. In other words, the separation sheet 30 comprises two longitudinal profile rails 33 and a downwardly tapering channel bottom 34 with sloping side walls 35, the sloping side walls 35 being sloped with respect to the y-axis.

When the battery cell groups 13 are arranged on the separation sheet 30, the channel bottom 34 with the sloping side walls 35 forms in conjunction with the venting side 14, in particular in conjunction with a carrier element 18, the venting chambers 36. The battery cell groups 13 are arranged on the separation sheet 30 such that between every two neighboring openings 32 one battery cell group 13 is placed as can be seen in Fig. 3 and 4. The venting chamber 36 is thus delimited upwards by the venting side 14 (or the carrier element 18) forming a first side and downwards by the separation sheet 30 forming a second side opposite the first side. The venting chamber 36 is further delimited to the sides by sidewall members 39. The separation member 30 may be produced via deep drawing a (metal) sheet, wherein via this drawing method the venting chamber 36 including the sidewall members 39 may be drawn. The openings 32 may be produced at the same time. The sidewall members 39 can be seen best in Fig. 4.

In a thermal runaway even, in a first step, a venting stream V comprising hot venting gasses and products, leaves the battery cell group 13 shown in Figs. 3 and 4 at the venting side 14 through the venting exit 16. A venting valve may be provided at the venting exit 16. In a second step, the venting gas expands into the venting chamber 36 such that the pressure of the venting gas and, through use of the thermal mass of the venting chamber 36, the temperature of the venting gas is reduced. Also, the venting stream V is guided down the sloping side walls 35 of the separation sheet 30 to the center of the channel bottom 34 and therefore the center of the venting chamber 36, the sloping side walls 35 thus acting as first guiding surfaces. The sloping side walls 35 can be seen in Fig. 3 but are not shown in Fig. 4. The sidewall members 39 may function as second guiding surfaces, wherein the right-side sidewall member 39a guides the venting stream V to the left towards the left-side sidewall member 39b and the left-side sidewall member 39b guides the venting stream V through the opening 32. As can be seen in Fig. 4, the sidewall member 39 of one venting chamber 36 functions not only as a guiding surface for the venting stream of this venting chamber 36 but also as a guiding surface for the venting stream of a neighboring cell chamber as the sidewall members 39 form dividing walls separating two neighboring cell chambers.

In a third step, the venting stream V is channelled away from the battery cell group 13 through the opening 32 into a venting channel 40 which is arranged between the separation sheet 30 and the bottom cover 20, see Fig.4. When entering the venting channel 40 the venting stream V may join a main venting stream Vₘ flowing along the venting channel 40, the main venting stream Vₘ being made up of the venting streams of other battery cell groups. The venting channel 40 connects a system exit 38 of the battery housing, shown schematically in Fig. 1, with the venting chambers 36 via the openings 32. In a fourth step, a venting valve provided at the system exit 38 opens at a certain pressure releasing the main venting stream Vₘ to the environment of the battery system 10.

Thanks to the venting chambers 36, a venting stream V leaving one of the battery cell groups 13 does not enter the venting channel 40 directly but instead has to pass through the venting chamber 36 first. The venting chamber 36, due to its thermal mass, reduces the venting stream temperature before the venting stream V enters the joint/main venting channel 40. The venting chamber 36 thus functions as a buffer space for the venting stream V where the venting stream V may be pre-cooled before entering the venting channel 40. Further, the battery cell groups 13 are protected as the separation sheet 30 with its dedicated venting chambers 36 and guiding surfaces 35, 39 leads the venting stream V away from the battery cells 12 towards the opening 32. The venting products can therefore not deposit onto the cells. The separation sheet 30 thus works as a baffle.

The proposed venting geometry thus leads to a sufficient cool-down of the venting products before leaving the respective venting chamber so that the risk of damaging other cells via heat propagation is reduced. Also, the venting chambers shield the respective battery cell group from a venting stream leaving another venting chamber as this venting stream cannot easily enter other venting chambers. Further, the venting products exiting the battery system of the invention towards the environment are at lower temperature than with known battery systems. The proposed arrangement of the discussed parts of the battery system is easy to achieve at basically no added cost with respect to known designs.

### Reference signs

- 10: battery system
- 12: battery cells
- 13: battery cell groups
- 14: venting side
- 15: Rows of battery cell groups
- 16: venting exit
- 17: connecting means
- 18: carrier element
- 20: bottom cover
- 22: struts
- 30: separation sheet
- 32: openings in the separation sheet
- 33: profile rails
- 34: channel bottom
- 35: sloping side walls
- 36: venting chamber
- 38: system exit
- 40: main venting channel

- V: venting stream
- Vₘ: main venting stream

## Claims

1. A battery system (10), comprising a battery housing, and a plurality of battery cells (12) being arranged in a plurality of battery cell groups (13) within the battery housing, wherein each battery cell group (13) comprises a venting side (14) with at least one venting exit (16) through which a venting stream (V) comprising venting products exits the battery cell group (13) in case of a thermal runaway, the battery system (10) further comprising a separation sheet (30) including two longitudinal profile rails (33) and a channel bottom (34) with sloping side walls (35) extending between the longitudinal profile rails (33), wherein openings (32) are disposed at the channel bottom (34), wherein the separation sheet (30) is disposed covering the venting sides (14) of the battery cell groups (13) such that the channel bottom (34) with the sloping side walls (35) forms, in conjunction with the venting side (14), separate venting chambers (36), one venting chamber (36) for each battery cell group (13), wherein for each venting chamber (36) one of the openings (32) is provided and each venting chamber (36) is adapted to guide the venting stream leaving the venting exits (16) away from the battery cell groups (13) through the respective opening (32) in the separation sheet (30), wherein each venting chamber (36) is delimited on a first side by the venting side (14) of the battery cell group (13) and on a second side opposite the first side by the separation sheet (30).

2. The battery system (10) of claim 1, wherein the battery system (10) comprises a cover element (20) facing the venting side (14) of the battery cell groups (13), the separation sheet (30) being arranged between the cover element (20) and the venting side (14), wherein a venting channel (40) is arranged between the separation sheet (30) and the cover element (20), the venting channel (40) connecting a system exit (38) of the battery housing with the venting chambers (36) via the openings (32) in the separation sheet (30).

3. The battery system (10) of claim 2, wherein the cover element is a bottom cover (20).

4. The battery system (10) of claim 3, wherein the bottom cover (20) is part of an underbody of the battery housing (20).
main request

5. The battery system (10) of any one of the preceding claims, wherein the battery cell groups (13) are supported by the separation sheet (30).

6. The battery system (10) of any one of the preceding claims, wherein the separation sheet (30) forms a structural member of the battery system (10).

7. The battery system (10) of any one of the preceding claims, wherein the separation sheet (30) comprises guiding surfaces (35, 39) for guiding the venting stream towards the opening (32).

8. The battery system (10) of claim 7, wherein a guiding surface (39) of the separation sheet (30) is arranged at a first end of the venting chamber (36) and the opening (32) is arranged at a second end of the venting chamber (36) opposite the first end such that the venting stream is guided from the venting exit (16) along the venting side (14) towards the opening (32).

9. The battery system (10) of any one of the preceding claims, wherein each battery cell group (13) forms a cell stack, each cell stack comprising battery cells (12) electrically connected with one another in parallel or in series.

10. The battery system (10) of any one of the preceding claims, wherein the battery system (10) comprises multiple rows (15) of battery cell groups (13), wherein for each row (15) of battery cell groups (13), the separation sheet (30) is arranged at the venting side (14) of the battery cell groups (13), each separation sheet (30) forming separate venting chambers (36), one venting chamber (36) for each battery cell group (13) of the respective row (15), for guiding the venting stream leaving the venting exits (16) away from the battery cell groups (13) through openings (32) in the separation sheet (30).

11. An electric vehicle including a battery system (10) according to any one of the preceding claims.

## Patentansprüche

1. Batteriesystem (10), umfassend ein Batteriegehäuse und eine Vielzahl von Batteriezellen (12), die in einer Vielzahl von Batteriezellengruppen (13) innerhalb des Batteriegehäuses angeordnet sind, wobei jede Batteriezellengruppe (13) eine Lüftungsseite (14) mit mindestens einem Lüftungsausgang (16) umfasst, durch den ein Lüftungsstrom (V), der Lüftungsprodukte umfasst, im Falle eines thermischen Durchgehens aus der Batteriezellengruppe (13) austritt, wobei das Batteriesystem (10) ferner ein Trennblech (30) umfasst, das zwei Längsprofilschienen (33) und einen Kanalboden (34) mit schrägen Seitenwänden (35) beinhaltet, die sich zwischen den Längsprofilschienen (33) erstrecken, wobei an dem Kanalboden (34) Öffnungen (32) angeordnet sind, wobei das Trennblech (30) die Lüftungsseiten (14) der Batteriezellengruppen (13) abdeckend angeordnet ist, sodass der Kanalboden (34) mit den schrägen Seitenwänden (35) in Verbindung mit der Lüftungsseite (14) separate Lüftungskammern (36) bildet, und zwar für jede Batteriezellengruppe (13) eine Lüftungskammer (36), wobei für jede Lüftungskammer (36) eine der Öffnungen (32) bereitgestellt ist und jede Lüftungskammer (36) eingerichtet ist, um den die Lüftungsausgänge (16) verlassenden Lüftungsstrom weg von den Batteriezellengruppen (13) durch die jeweilige Öffnung (32) im Trennblech (30) zu leiten, wobei jede Lüftungskammer (36) auf einer ersten Seite durch die Lüftungsseite (14) der Batteriezellengruppe (13) und auf einer zweiten, der ersten Seite gegenüberliegenden Seite durch das Trennblech (30) begrenzt ist.

2. Batteriesystem (10) nach Anspruch 1, wobei das Batteriesystem (10) ein der Lüftungsseite (14) der Batteriezellengruppen (13) zugewandtes Abdeckelement (20) umfasst, wobei das Trennblech (30) zwischen dem Abdeckelement (20) und der Lüftungsseite (14) angeordnet ist, wobei zwischen dem Trennblech (30) und dem Abdeckelement (20) ein Lüftungskanal (40) angeordnet ist, wobei der Lüftungskanal (40) über die Öffnungen (32) im Trennblech (30) einen Systemausgang (38) des Batteriegehäuses mit den Lüftungskammern (36) verbindet.

3. Batteriesystem (10) nach Anspruch 2, wobei das Abdeckelement eine untere Abdeckung (20) ist.

4. Batteriesystem (10) nach Anspruch 3, wobei die untere Abdeckung (20) Teil eines Unterbodens des Batteriegehäuses (20) ist.

5. Batteriesystem (10) nach einem der vorhergehenden Ansprüche, wobei die Batteriezellengruppen (13) durch das Trennblech (30) gestützt sind.

6. Batteriesystem (10) nach einem der vorhergehenden Ansprüche, wobei das Trennblech (30) ein Strukturelement des Batteriesystems (10) bildet.

7. Batteriesystem (10) nach einem der vorhergehenden Ansprüche, wobei das Trennblech (30) Leitflächen (35, 39) zum Leiten des Lüftungsstroms in Richtung der Öffnung (32) umfasst.

8. Batteriesystem (10) nach Anspruch 7, wobei eine Leitfläche (39) des Trennblechs (30) an einem ersten Ende der Lüftungskammer (36) angeordnet ist und die Öffnung (32) an einem dem ersten Ende gegenüberliegenden zweiten Ende der Lüftungskammer (36) angeordnet ist, sodass der Lüftungsstrom vom Lüftungsausgang (16) entlang der Lüftungsseite (14) in Richtung der Öffnung (32) geleitet wird.

9. Batteriesystem (10) nach einem der vorhergehenden Ansprüche, wobei jede Batteriezellengruppe (13) einen Zellenstapel bildet, wobei jeder Zellenstapel Batteriezellen (12) umfasst, die parallel oder in Reihe elektrisch miteinander verbunden sind.

10. Batteriesystem (10) nach einem der vorhergehenden Ansprüche, wobei das Batteriesystem (10) mehrere Reihen (15) von Batteriezellengruppen (13) umfasst, wobei für jede Reihe (15) von Batteriezellengruppen (13) das Trennblech (30) auf der Lüftungsseite (14) der Batteriezellengruppen (13) angeordnet ist, wobei jedes Trennblech (30) separate Lüftungskammern (36) bildet, und zwar eine Lüftungskammer (36) für jede Batteriezellengruppe (13) der jeweiligen Reihe (15), um den die Lüftungsausgänge (16) verlassenden Lüftungsstrom durch Öffnungen (32) im Trennblech (30) weg von den Batteriezellengruppen (13) zu leiten.

11. Elektrofahrzeug, das ein Batteriesystem (10) nach einem der vorhergehenden Ansprüche beinhaltet.

## Revendications

1. Système de batterie (10), comprenant un boîtier de batterie, et une pluralité d'éléments de batterie (12) étant agencés en une pluralité de groupes d'éléments de batterie (13) à l'intérieur du boîtier de batterie, dans lequel chaque groupe d'éléments de batterie (13) comprend un côté d'évacuation (14) avec au moins une sortie d'évacuation (16) à travers laquelle un flux d'évacuation (V) comprenant des produits d'évacuation sort du groupe d'éléments de batterie (13) en cas d'emballement thermique, le système de batterie (10) comprenant en outre une feuille de séparation (30) comportant deux rails de profil longitudinal (33) et une partie inférieure de canal (34) avec des parois latérales inclinées (35) s'étendant entre les rails de profil longitudinal (33), dans lequel des ouvertures (32) sont disposées au niveau de la partie inférieure de canal (34), dans lequel la feuille de séparation (30) est disposée recouvrant les côtés d'évacuation (14) des groupes d'éléments de batterie (13) de sorte que la partie inférieure de canal (34) avec les parois latérales inclinées (35) forme, conjointement avec le côté d'évacuation (14), des chambres d'évacuation (36) séparées, une chambre d'évacuation (36) pour chaque groupe d'éléments de batterie (13), dans lequel pour chaque chambre d'évacuation (36) une des ouvertures (32) est prévue et chaque chambre d'évacuation (36) est adaptée pour guider le flux d'évacuation quittant les sorties d'évacuation (16) à l'écart des groupes d'éléments de batterie (13) à travers l'ouverture (32) respective dans la feuille de séparation (30), dans lequel chaque chambre d'évacuation (36) est délimitée d'un premier côté par le côté d'évacuation (14) du groupe d'éléments de batterie (13) et d'un second côté opposé au premier côté par la feuille de séparation (30).

2. Système de batterie (10) selon la revendication 1, dans lequel le système de batterie (10) comprend un élément de couvercle (20) orienté vers le côté d'évacuation (14) des groupes d'éléments de batterie (13), la feuille de séparation (30) étant agencée entre l'élément de couvercle (20) et le côté d'évacuation (14), dans lequel un canal d'évacuation (40) est agencé entre la feuille de séparation (30) et l'élément de couvercle (20), le canal d'évacuation (40) reliant une sortie de système (38) du boîtier de batterie aux chambres d'évacuation (36) par l'intermédiaire des ouvertures (32) dans la feuille de séparation (30).

3. Système de batterie (10) selon la revendication 2, dans lequel l'élément de couvercle est un couvercle inférieur (20).

4. Système de batterie (10) selon la revendication 3, dans lequel le couvercle inférieur (20) fait partie d'un corps inférieur du boîtier de batterie (20).

5. Système de batterie (10) selon l'une quelconque des revendications précédentes, dans lequel les groupes d'éléments de batterie (13) sont soutenus par la feuille de séparation (30).

6. Système de batterie (10) selon l'une quelconque des revendications précédentes, dans lequel la feuille de séparation (30) forme un élément structurel du système de batterie (10).

7. Système de batterie (10) selon l'une quelconque des revendications précédentes, dans lequel la feuille de séparation (30) comprend des surfaces de guidage (35, 39) pour guider le flux d'évacuation vers l'ouverture (32).

8. Système de batterie (10) selon la revendication 7, dans lequel une surface de guidage (39) de la feuille de séparation (30) est agencée au niveau d'une première extrémité de la chambre d'évacuation (36) et l'ouverture (32) est agencée au niveau d'une seconde extrémité de la chambre d'évacuation (36) opposée à la première extrémité de sorte que le flux d'évacuation soit guidé depuis la sortie d'évacuation (16) le long du côté d'évacuation (14) vers l'ouverture (32).

9. Système de batterie (10) selon l'une quelconque des revendications précédentes, dans lequel chaque groupe d'éléments de batterie (13) forme une pile d'éléments, chaque pile d'éléments comprenant des éléments de batterie (12) connectés électriquement entre eux en parallèle ou en série.

10. Système de batterie (10) selon l'une quelconque des revendications précédentes, dans lequel le système de batterie (10) comprend plusieurs rangées (15) de groupes d'éléments de batterie (13), dans lequel pour chaque rangée (15) de groupes d'éléments de batterie (13), la feuille de séparation (30) est agencée au niveau du côté d'évacuation (14) des groupes d'éléments de batterie (13), chaque feuille de séparation (30) formant des chambres d'évacuation (36) séparées, une chambre d'évacuation (36) pour chaque groupe d'éléments de batterie (13) de la rangée (15) respective, pour guider le flux d'évacuation quittant les sorties d'évacuation (16) à l'écart des groupes d'éléments de batterie (13) à travers des ouvertures (32) dans la feuille de séparation (30).

11. Véhicule électrique comportant un système de batterie (10) selon l'une quelconque des revendications précédentes.
